# EUROPÄISCHE PATENTANMELDUNG

(11) **EP 4 199 165 A1**
(43) Veröffentlichungstag der Anmeldung: **21.06.2023**
(21) Anmeldenummer: 21214491.9
(22) Anmeldetag: 14.12.2021
(51) Int. Cl.: H01M 10/052, C22B 7/00, H01M 10/0568, H01M 10/54

(54) **VERFAHREN ZUM WIEDERVERWERTEN VON AKKUMULATOREN UND AKKUMULATOREN-AUFBEREITUNGSANLAGE**

(71) Anmelder: Duesenfeld GmbH, 38176 Wendeburg (DE)
(72) Erfinder: Bußmann, Till, 30938 Burgwedel (DE)
(74) Vertreter: Gramm, Lins & Partner Patent- und Rechtsanwälte PartGmbB

(57) **Zusammenfassung**

Die Erfindung betrifft ein Verfahren zum Wiederverwerten von Akkumulatoren, insbesondere Lithium-Akkumulatoren, die ein in einem Leitsalz-Lösungsmittel gelöstes Leitsalz enthalten, mit den Schritten: (a) Zerkleinern der Akkumulatoren, sodass Zerkleinerungsmaterial erhalten wird, und (b) Auswaschen des Leitsalzes mit einem Wasch-Lösungsmittel aus dem Zerkleinerungsmaterial, sodass gewaschenes Zerkleinerungsmaterial erhalten wird.

## Beschreibung

Die Erfindung betrifft ein Verfahren zum Wiederverwerten von Akkumulatoren, insbesondere Lithium-Akkumulatoren, die ein in einem Leitsalz-Lösungsmittel gelöstes Leitsalz enthalten. Gemäß einem zweiten Aspekt betrifft die Erfindung eine Akkumulatoren-Aufbereitungsanlage, insbesondere eine Lithium-Akkumulatoren-Aufbereitungsanlage, mit (a) einer Akkumulator-Zerkleinerungsanlage zum Zerkleinern der Akkumulatoren, sodass Zerkleinerungsmaterial erhalten wird, und (b) einer Waschvorrichtung zum Waschen des Zerkleinerungsmaterials mit einem Wasch-Lösungsmittel, sodass Waschflüssigkeit erhalten wird.

Akkumulatoren, die nicht weiterverwendet werden können, sollten wiederverwertet werden. Beim Wiederverwerten werden in den Akkumulatoren vorhandene Stoffe oder chemische Elemente so voneinander getrennt, dass sie erneut zum Herstellen von Akkumulatoren oder für andere Zwecke einsetzbar sind.

Es ist wünschenswert, dass beim Wiederverwerten, was auch als Recycling bezeichnet wird, möglichst wenig unerwünschte Nebenprodukte entstehen. Insbesondere ist es wünschenswert, dass beim Wiederverwerten möglichst wenig Treibhausgase entstehen, denn einer der Gründe für den vermehrten Einsatz von Akkumulatoren ist der Wunsch, die Menge an Treibhausgasen zu vermindern, die bei der Energieversorgung entstehen.

Es ist eine Vielzahl an Verfahren zum Wiederverwerten von Akkumulatoren, insbesondere Lithium-Akkumulatoren, bekannt, die aber einen vergleichsweise großen CO2-Fußabdruck besitzen.

Der Erfindung liegt die Aufgabe zugrunde, das Wiederverwerten von Akkumulatoren, insbesondere Lithium-Akkumulatoren, zu verbessern.

Die Erfindung löst das Problem durch ein Verfahren zum Wiederverwerten von Akkumulatoren, insbesondere Lithium-Akkumulatoren, die ein in einem Leitsalz-Lösungsmittel gelöstes Leitsalz enthalten, mit den Schritten (a) Zerkleinern der Akkumulatoren, sodass Zerkleinerungsmaterial erhalten wird, und (b) Auswaschen des Leitsalzes mit einem Wasch-Lösungsmittel aus dem Zerkleinerungsmaterial, sodass gewaschenes Zerkleinerungsmaterial erhalten wird.

Gemäß einem zweiten Aspekt löst die Erfindung das Problem durch eine gattungsgemäße Akkumulatoren-Wiederaufarbeitungsanlage, die eine Waschvorrichtung zum Waschen des Zerkleinerungsmaterials mit einem Wasch-Lösungsmittel, sodass Waschflüssigkeit erhalten wird, aufweist.

Vorteilhaft an der Erfindung ist, dass durch das Auswaschen des Leitsalzes ein großer Teil an Fluor aus dem Zerkleinerungsmaterial entfernt werden kann, sofern der Akkumulator Fluor enthält. Fluor kann zu Fluorwasserstoff und/oder fluororganischen Substanzen reagieren, die hochgradig toxisch sind und/oder zu großem Verschleiß an der Akkumulatoren-Wiederaufarbeitungsanlage führen.

Werden zumindest auch Lithium-Akkumulatoren verarbeitet, so kann durch das Auswaschen des Leitsalzes ein großer Teil des Lithiums auf relativ einfache Weise entfernt werden. Das erleichtert eine etwaige nachfolgende nasschemische Extraktion.

Enthält das Leitsalz-Lösungsmittel einen Bestandteil, dessen Siedepunkt höher ist als der Siedepunkt des Wasch-Lösungsmittels, was eine bevorzugte Ausführungsform der Erfindung darstellt, so kann durch das Auswaschen des Leitsalzes in der Regel auch dieser Bestandteil zu einem großen Teil entfernt werden. Bei einem nachfolgenden Trocknungsschritt, der gemäß einer bevorzugten Ausführungsform vorgesehen ist, muss dieser Bestandteil nicht mehr oder nur noch zu einem geringeren Teil entfernt werden, was das Trocknen erleichtert.

Im Rahmen der vorliegenden Beschreibung wird unter einem Lithium-Akkumulator ein Akkumulator verstanden, bei dem die elektrische Nutzenergie durch eine elektrochemische Reaktion mit Lithium bereitgestellt wird. Der Lithium-Akkumulator enthält einen Elektrolyten, der das Leitsalz-Lösungsmittel ist.

Unter dem Zerkleinerungsgut wird das Produkt des Zerkleinerns von Akkumulatoren verstanden. Das Zerkleinerungsgut kann durch weitere mechanische Trennschritte verändert oder in verschiedene Fraktionen aufgeteilt werden. Nach einer chemischen Umwandlung, also einer chemischen Reaktion, beispielsweise einem Verbrennen oder einem Versetzen mit einer Säure, das nicht nur zur pH-Wertanpassung erfolgt, liegt kein Zerkleinerungsgut mehr vor.

Unter dem Auswaschen wird insbesondere ein Zugeben und ein Abziehen des Wasch-Lösungsmittels zum Zerkleinerungsmaterial verstanden, sodass Leitsalz in das Wasch-Lösungsmittel übergeht. Das Auswaschen kann ein kontinuierliches Zugeben und Abziehen des Wasch-Lösungsmittels aufweisen, es wird dann von einem kontinuierlichen Auswaschen gesprochen. Das Auswaschen kann zudem ein einmaliges Zugeben und einmaliges Abgeben des Wasch-Lösungsmittels sein, es wird dann von einem diskontinuierlichen Auswaschen gesprochen. Das Auswaschen kann zudem ein mehrmaliges, nicht kontinuierliches Zugeben und Abgeben von Wasch-Lösungsmittel aufweisen, es wird dann von einem semi-kontinuierlichen Auswaschen gesprochen. Wenn im Folgenden vom Auswaschen oder Waschen gesprochen wird, ist damit stets das Zugeben und ein Abziehen des Wasch-Lösungsmittels gemeint.

Das Wasch-Lösungsmittel ist vorzugsweise ein organisches Lösungsmittel. Vorzugsweise ist das Wasch-Lösungsmittel ein Reinstoff, also keine Mischung. Unter dem Merkmal, dass das Wasch-Lösungsmittel ein Reinstoff ist, wird insbesondere verstanden, dass das Wasch-Lösungsmittel zu zumindest 85 Gewichtsprozent, insbesondere zu zumindest 90 Gewichtsprozent, aus einem Reinstoff besteht. Es kann jedoch auch eine Mischung aus Reinstoffen verwendet werden. Eine Mischung enthält vorzugsweise höchstens drei Bestandteile.

Beispielsweise ist das Wasch-Lösungsmittel Aceton, Acetessigester, Ethylacetat Methylethlyketon und/oder Tetrahydrofuran. Vorzugsweise enthält das Wasch-Lösungsmittel kein N-Methyl-2-pyrrolidon.

Unter der Schwarzmasse wird die graphithaltige Fraktion des Zerkleinerungsmaterials verstanden, die aus dem Zerkleinerungsmaterial durch Abscheiden von Gehäuseteilen und Metallteilen, beispielsweise Anschlusselektroden, sowie Folien , beispielsweise der Teile Separatorfolie oder der Leiterfolie, entsteht.

Unter Folien werden insbesondere Teile der Separatorfolie und der Leiterfolie verstanden.

Gemäß einer bevorzugten Ausführungsform ist das Leitsalz eine Fluorverbindung und/oder enthält zumindest 5 Gewichtsprozent einer Fluorverbindung. Vorzugsweise ist diese Fluorverbindung LiPF6 oder NaPF6. In diesem Fall ist es günstig, wenn das Auswaschen so lange durchgeführt wird, bis die Menge (gemessen als Gewicht) an Leitsalz um zumindest 80%, insbesondere zumindest 90%, abgenommen hat. Vorzugsweise ist das Leitsalz eine Lithium-Verbindung oder enthält zumindest 50 Gewichtsprozent einer Lithium-Verbindung. Durch das Entfernen des Leitsalzes ist es dann bevorzugt, einen großen Anteil, insbesondere zumindest die Hälfte, des gesamten Lithiums im Zerkleinerungsmaterial zu entfernen. Aus dem Wasch-Lösungsmittel lässt sich das Leitsalz und damit das Lithium einfacher entfernen als aus dem Zerkleinerungsmaterial.

Vorzugsweise wird das Auswaschen so lange durchgeführt, bis zumindest 80% an Ethylencarbonat (EC), Dimethylcarbonat (DMC), Ethylmethylcarbonat (EMC) und/oder Diethylcarbonat (DEC) entfernt sind. Alternativ oder zusätzlich wird das Auswaschen vorzugsweise so lange durchgeführt, bis zumindest 80% an Fluorbenzol, Methanol; Ethanol, Propylenecarbonat, Phenylcyclohexan (Cyclohexylbenzol) und/oder Trimethyl-(trifluormethyl)-silan entfernt sind.

Vorzugsweise umfasst das Verfahren den Schritt des Entfernens des Wasch-Lösungsmittels aus dem Zerkleinerungsmaterial. Das Entfernen des Wasch-Lösungsmittels kann beispielsweise durch Absaugen, Abnutschen, Ausschleudern oder Ablaufenlassen erfolgen.

Vorzugsweise umfasst das Verfahren den Schritt des Abscheidens des Wasch-Lösungsmittel aus einer Waschflüssigkeit, die durch das Auswaschen des Leitsalzes mit dem Wasch-Lösungsmittel aus dem Zerkleinerungsmaterial entstanden ist. Dadurch entsteht regeneriertes Wasch-Lösungsmittel. Auf diese Weise kann das Wasch-Lösungsmittel, wie gemäß einer bevorzugten Ausführungsform vorgesehen, wiederverwendet werden, also erneut zum Zerkleinerungsmaterial hinzugegeben werden. Vorzugsweise wird das Wasch-Lösungsmittel im Kreislauf geführt, das heißt immer wieder verwendet.

Das Abscheiden des Wasch-Lösungsmittels aus der Waschflüssigkeit erfolgt beispielsweise durch Destillieren, insbesondere kontinuierliche Destillation. Alternativ oder zusätzlich kann das Abscheiden eine Schwerkraft-Trennung und/oder ein Zentrifugieren und/oder ein Filtern umfassen.

Günstig ist es, wenn das Verfahren den Schritt des nasschemischen Extrahierens mindestens eines metallischen Bestandteils aus dem Zerkleinerungsmaterial aufweist. Das nasschemische Extrahieren umfasst vorzugsweise den Schritt des Zugebens einer Mineralsäure, insbesondere Schwefelsäure oder Salzsäure.

Das nasschemische Extrahieren umfasst vorzugsweise den Schritt des Zugebens von konzentrierter Schwefelsäure, sodass das verbleibende Fluor zu zumindest 80%, insbesondere zumindest 90%, ausgetrieben wird. Durch das vorherige Auswaschen des Leitsalzes muss weniger Schwefelsäure eingesetzt werden, um das Fluor auszutreiben. Das führt zu weniger Abfallstoffen und zu einem geringeren Ressourcenverbrauch.

Das Leitsalz-Lösungsmittel hat einen maximalen Siedepunkt. Das ist diejenige Temperatur, für die gilt, dass von 1 Liter Leitsalz-Lösungsmittel nach 1 Stunde bei dieser Temperatur bei 1013 hPa zumindest 99 Gewichtsprozent verdampft sind. Wenn das Leitsalz-Lösungsmittel, wie gemäß einer bevorzugten Ausführungsform vorgesehen, aus einem Reinstoff besteht, entspricht der maximale Siedepunkt dem Siedepunkt des Leitsalz-Lösungsmittels. Wenn das Leitsalz-Lösungsmittel, wie gemäß einer alternativen Ausführungsform vorgesehen, eine Mischung von Reinstoffen ist, die jeweils einen Siedepunkt haben, so ist der maximale Siedepunkt der Siedepunkt des höchstsiedenden Bestandteils.

Vorzugsweise liegt der maximale Siedepunkt des Wasch-Lösungsmittels unterhalb des maximalen Siedepunkts des Leitsalz-Lösungsmittels. Vorzugsweise liegt der maximale Siedepunkt des Wasch-Lösungsmittels zumindest 10 Kelvin, vorzugsweise zumindest 20 Kelvin, besonders bevorzugt zumindest 30 Kelvin, unterhalb des maximalen Siedepunkts des Leitsalz-Lösungsmittels.

Günstig ist es, wenn der maximale Siedepunkt des Wasch-Lösungsmittels höchstens 90°C, vorzugsweise höchstens 80°C, besonders bevorzugt höchstens 70°C, insbesondere höchstens 60°C und ganz besonders bevorzugt höchstens 50°C beträgt. Das erleichtert das Entfernen des Wasch-Lösungsmittels in einem bevorzugt vorhandenen späteren Trocknungsschritt. Zudem wird beim Trocknen bei so niedrigen Temperaturen die Bildung gefährlicher Fluorverbindungen, insbesondere von Fluorwasserstoff, vermindert oder verhindert.

Das Leitsalz hat eine Löslichkeit im Wasch-Lösungsmittel, die in Gramm Leitsalz pro Liter Wasch-Lösungsmittel bei maximaler Sättigung des Wasch-Lösungsmittel mit Leitsalz angegeben ist. Gemäß einer bevorzugten Ausführungsform beträgt eine Löslichkeit des Leitsalzes in dem Wasch-Lösungsmittel, die zumindest die Hälfte der Löslichkeit des Leitsalzes in Elektrolyten. Besonders günstig ist es, wenn die Löslichkeit des Leitsalzes im Wasch-Lösungsmittel größer ist als im Leitsalz-Lösungsmittel.

Vorzugsweise wird das Auswaschen des Leitsalzes mittels explosionsgeschützter Maschinen und/oder in einer explosionsgeschützten Atmosphäre durchgeführt.

Vorzugsweise ist das Wasch-Lösungsmittel ein Lösungsmittel für PVDF (Polyvinylidenfluorid). PVDF ist ein häufig verwendeter Binder in Lithium-Batterien und fluorhaltig. Durch ein entsprechendes Wasch-Lösungsmittel kann auch der Binder herausgelöst werden, was die Fluorkonzentration im gewaschenen zerkleinerten Material weiter verringert.

Vorzugsweise wird das ist das Auswaschen des Leitsalzes zudem ein Auflösen des Binders. Gemäß einer bevorzugten Ausführungsform wird das Waschen mit dem Wasch-Lösungsmittel so lange durchgeführt, dass zumindest 70 Gewichtsprozent, vorzugsweise zumindest 80 Gewichtsprozent, insbesondere zumindest 90 Gewichtsprozent, des Binders entfernt sind.

Vorzugsweise umfasst das Verfahren die Schritte (a) Trocknen des gewaschenen Zerkleinerungsmaterials und vorzugsweise (b) danach Abtrennen von Folien, insbesondere Metallfolien, und/oder von Schwergut aus dem gewaschenen Zerkleinerungsmaterial, sodass Schwarzmasse erhalten wird.

Alternativ kann das Verfahren die Schritte (a) Abtrennen von Folien, insbesondere Metallfolien, und/oder von Schwergut aus dem gewaschenen Zerkleinerungsmaterial und (b) danach Trocknen des gewaschenen Zerkleinerungsmaterials aufweisen.

Das Trocknen erfolgt vorzugsweise unter Unterdruck. Beispielsweise beträgt der Druck beim Trocknen höchstens 700 hPa, insbesondere höchstens 600 hPa, vorzugsweise höchstens 500 hPa. Insbesondere beträgt der Druck zumindest 100 hPa, vorzugsweise zumindest 200 hPa, insbesondere zumindest 300 hPa. Die Temperatur liegt beim Trocknen vorzugsweise bei höchstens 90°C, vorzugsweise höchstens 80°C, besonders bevorzugt höchstens 70°C, insbesondere höchstens 60°C und ganz besonders bevorzugt höchstens 50°C.

Gemäß einer bevorzugten Ausführungsform wird das Trocknen beendet, wenn so viel Wasch-Lösungsmittel entzogen wurde, dass sich bei 23°C und 1013 hPa in einem zur Hälfte mit getrocknetem Material gefüllten 50I-Fass keine brennbare Atmosphäre bilden kann.

Werden Metallfolien abgetrennt, so werden diese gemäß einer bevorzugten Ausführungsform ebenfalls nach dem Waschen getrocknet und/oder an der Metallfolie anhaftende Schwarzmasse separiert, beispielsweise mittels eines Luftstrahlsiebs.

Vorzugsweise umfasst das Verfahren den Schritt des Trocknens des Zerkleinerungsmaterials nach dem Zerkleinern, insbesondere ohne vorangegangenes Waschen.

Das Trocknen erfolgt vorzugsweise bei höchstens 80°C, insbesondere bei höchstens 70°C, vorzugsweise bei höchstens 60°, besonders bevorzugt bei höchstens 50°. Auf diese Weise wird getrocknetes Zerkleinerungsmaterial erhalten. Vorzugsweise erfolgt das Trocknen bei Unterdruck, wobei der Druck vorzugsweise höchstens 600 hPa, insbesondere höchstens 300 hPa, beträgt.

Das Trocknen wird vorzugsweise so durchgeführt, dass hochsiedende Bestandteile, deren Dampfdruck bei 50°C unter 10 hPa, insbesondere unter 5 hPa, beträgt, zu höchstens 30 Gewichtsprozent, insbesondere höchstens 20 Gewichtsprozent, entfernt werden. Das weitere Entfernen dieser Bestandteile erfordert einen hohen Zeit- und Energieaufwand. Durch das spätere Waschen des Zerkleinerungsguts werden die hochsiedenden Bestandteile ausgewaschen und so entfernt.

Alternativ oder zusätzlich wird das Trocknen beendet, bevor der das Leitsalz-Lösungsmittel zu mehr als 95 Gewichtsprozent, insbesondere mehr als 90 Gewichtsprozent, entfernt wurde. So verbleiben Bestandteile des Elektrolyten im Zerkleinerungsmaterial, die besonders schwer zu entfernen sind. Diese können in danach in einem gemäß einer bevorzugten Ausführungsform vorgesehenen Schritt des Auswaschens des Leitsalzes mit dem Wasch-Lösungsmittel aus dem Zerkleinerungsmaterial einfach ausgewaschen werden.

Beim getrockneten Zerkleinerungsmaterial in einem gemäß einer bevorzugten Ausführungsform vorgesehenen Schritt Schwergut, insbesondere zerkleinerte Teile des Gehäuses, und/oder Folien, insbesondere von Metallfolien, abgetrennt. Auf diese Weise wird Zerkleinerungsmaterial in Form von Schwarzmasse erhalten.

Durch ein Abtrennen von Schwergut, das insbesondere aus Teilen des Gehäuses aus Plastik besteht, wird verhindert, dass diese Objekte bei einem etwaigen späteren Waschen durch das Wasch-Lösungsmittel angelöst werden. Das würde zu einer Verunreinigung des Wasch-Lösungsmittels führen.

Gemäß einer bevorzugten Ausführungsform umfasst das Verfahren den Schritt des Abtrennens der Folien in Kunststofffolien und Metallfolien aus dem - gegebenenfalls getrockneten - Zerkleinerungsmaterial. Die Metallfolien sind häufig mit Schwarzmasse beschichtet. Die Schwarzmasse löst sich oft nicht vollständig von der Metallfolie. Kunststofffolie hingegen ist in der Regel nicht mit Schwarzmasse beschichtet, kann aber durch das Wasch-Lösungsmittel angelöst oder aufgequollen werden, was zumeist unerwünscht ist. Durch das Trennen der Folien in Kunststofffolien und Metallfolien, was beispielsweise mechanisch erfolgt, können beide Folientypen getrennt verarbeitet werden.

Vorzugsweise werden die Metallfolien nach dem Trennen von den Kunststofffolienmit dem Wasch-Lösungsmittel gewaschen. Das kann gemeinsam mit der abgetrennten Schwarzmasse geschehen oder getrennt davon. Wird die Metallfolie - wie gemäß einer bevorzugten Ausführungsform vorgesehen - vor dem Trennen von der Kunststofffolie nicht ausgewaschen (auch nicht zusammen mit anderen), wird die Metallfolie vorzugsweise zusammen mit nicht an der Metallfolie anhaftender Schwarzmasse ausgewaschen. Alternativ oder zusätzlich wird die Metallfolie gesondert ausgewaschen. Letzteres hat den Vorteil, dass für die meisten Typen an Lithium-Batterien beim Auswaschen eine so eine besonders kobalthaltige Schwarzmasse erhalten wird.

Diese Schwarzmasse stellt eine Form von Zerkleinerungsmaterial dar. Aus diesem Zerkleinerungsmaterial wird das Leitsalz mit dem Wasch-Lösungsmittel gemäß einer bevorzugten Ausführungsform ausgewaschen.

Vorzugsweise wird die so erhaltene gewaschene Schwarzmasse dann getrocknet. Das Trocknen erfolgt vorzugsweise bei höchstens 70°C, vorzugsweise bei höchstens 60°, besonders bevorzugt bei höchstens 50°. Auf diese Weise wird getrocknetes Zerkleinerungsmaterial erhalten. Vorzugsweise erfolgt das Trocknen bei Unterdruck, wobei der Druck vorzugsweise höchstens 600 hPa, insbesondere höchstens 300 hPa, beträgt.

Es ist aber auch möglich, das Trocknen bei mehr als 80° durchzuführen. Dabei können Fluorverbindungen entstehen, beispielsweise Fluorwasserstoff. Durch das vorherige Auswaschen des Leitsalzes ist die Menge an Fluorwasserstoff, die dabei entsteht, jedoch reduziert.

Eine erfindungsgemäße Akkumulatoren-Aufbereitungsanlage besitzt vorzugsweise eine Waschlösungsmittel-Regenerationsanlage zum Abtrennen von Wasch-Lösungsmittel aus der Waschflüssigkeit und Rückführen des Wasch-Lösungsmittels zur Waschvorrichtung. Die Waschlösungsmittel-Regenerationsanlage umfasst beispielsweise eine Destilliervorrichtung.

Vorzugsweise besitzt die Akkumulatoren-Aufbereitungsanlage einen in Materialflussrichtung hinter oder vor der Waschvorrichtung angeordneten Trockner, der ausgebildet ist zum Trocknen des getrockneten Zerkleinerungsmaterials. Insbesondere ist der Trockner unmittelbar hinter oder vor der Waschvorrichtung angeordneten, das heißt, dass der Trockner direkt mit der Waschvorrichtung verbunden ist. Diese Verbindung ist vorzugsweise staubdicht, insbesondere gasdicht.

Gemäß einer bevorzugten Ausführungsform besitzt die Akkumulatoren-Aufbereitungsanlage eine Trennvorrichtung zum Abtrennen von Schwergut und/oder von Folien, insbesondere Kunststoff- und/oder Metallfolien, des Zerkleinerungsguts, sodass Schwarzmasse erhalten wird. Diese Trennvorrichtung kann in Materialflussrichtung vor der Waschvorrichtung oder nach der Waschvorrichtung angeordnet sein. Es ist auch möglich, dass die Akkumulatoren-Aufbereitungsanlage zwei Trennvorrichtungen aufweist, wobei eine in Materialflussrichtung vor der Waschvorrichtung und eine nach der Waschvorrichtung angeordnet ist.

Es ist möglich, nicht aber notwendig, dass die Trennvorrichtung einen Teil der Waschvorrichtung bildet oder ein Gehäuse mit der Waschvorrichtung teilt. Vorzugsweise ist die Trennvorrichtung aber von der Waschvorrichtung getrennt angeordnet.

Vorzugsweise besitzt die Akkumulatoren-Aufbereitungsanlage eine nasschemische Aufbereitungsanlage zum nasschemischen Extrahieren zumindest eines Metallbestandteils aus der gewaschenen Schwarzmasse. Die nasschemische Aufbereitungsanlage weist vorzugsweise zumindest einen Reaktor auf, der ausgebildet ist zum Versetzen der gewaschenen Schwarzmasse mit einer Mineralsäure, insbesondere mit konzentrierter Schwefelsäure. Dazu besitzt der Reaktor eine Zuleitung für Schwefelsäure und einen, vorzugsweise mit Schwefelsäure gefüllten, Schwefelsäurebehälter.

Vorzugsweise besitzt die Aufbereitungsanlage eine Abgasreinigungsanlage zum Reinigen des Abgases, das beim Versetzen der gewaschenen Schwarzmasse mit konzentrierter Schwefelsäure entsteht. Die Abgasreinigungsanlage besitzt beispielsweise eine Fluorwasserstoff-Fällvorrichtung zum Ausfällen von Fluorwasserstoff. Dazu kann beispielsweise eine Flüssigkeit verwendet werden, die Calciumionen enthält.

Die Akkumulatoren-Aufbereitungsanlage ist vorzugsweise explosionsgeschützt ausgebildet. Wird, wie gemäß einer bevorzugten Ausführungsform vorgesehen, ein Lösungsmittel eingesetzt, das einen Flammpunkt von unterhalb von 250 °C hat, kann ohne Schutzmaßnahmen Explosionsgefahr bestehen. Vorzugsweise sind daher insbesondere die Leitungen, die von der Waschvorrichtung 22 wegführen explosionsgeschützt ausgeführt. Besonders bevorzugt sind alle Leitungen im Materialflusspfad zwischen der Akkumulatoren-Zerkleinerungsanlage und einem Trockner explosionsgeschützt ausgeführt.

Im Folgenden wird die Erfindung anhand der beigefügten Zeichnung näher erläutert. Darin zeigt
- Figur 1: eine schematische Ansicht einer erfindungsgemäßen Akkumulatoren-Aufbereitungsanlage zum Durchführen eines erfindungsgemäßen Verfahrens gemäß einer ersten Ausführungsform,
- Figur 2: eine schematische Ansicht einer erfindungsgemäßen Akkumulatoren-Aufbereitungsanlage zum Durchführen eines erfindungsgemäßen Verfahrens gemäß einer zweiten Ausführungsform,
- Figur 3: eine schematische Ansicht einer erfindungsgemäßen Akkumulatoren-Aufbereitungsanlage zum Durchführen eines erfindungsgemäßen Verfahrens gemäß einer dritten Ausführungsform,
- Figur 4: eine schematische Ansicht einer erfindungsgemäßen Akkumulatoren-Aufbereitungsanlage zum Durchführen eines erfindungsgemäßen Verfahrens gemäß einer vierten Ausführungsform,
- Figur 5: eine schematische Ansicht einer erfindungsgemäßen Akkumulatoren-Aufbereitungsanlage zum Durchführen eines erfindungsgemäßen Verfahrens gemäß einer fünften Ausführungsform und
- Figur 6: eine schematische Ansicht einer erfindungsgemäßen Akkumulatoren-Aufbereitungsanlage zum Durchführen eines erfindungsgemäßen Verfahrens gemäß einer sechsten Ausführungsform.

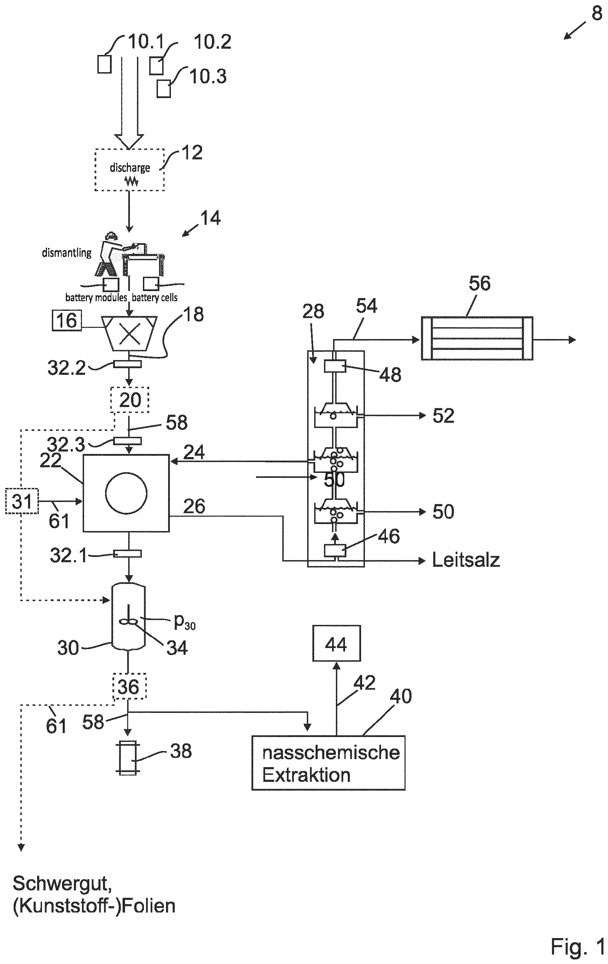

Figur 1 zeigt eine Akkumulatoren-Aufbereitungsanlage 8 zum Aufbereiten von Akkumulatoren 10.1, 10.2, .... Die Akkumulatoren können beispielsweise in Form von Batteriesystemen vorliegen, in denen jeweils eine Vielzahl an galvanischen Zellen sowie eine Ladesteuerung enthalten sind.

In einer optional vorhandenen Entladestation 12 werden die Akkumulatoren tiefentladen. Eine Spannung zwischen den Elektroden der Akkumulatoren ist dann beispielsweise kleiner als 0,1 V. Nach dem optionalen Entladen werden in einer optionalen Demontagestation 14 die einzelnen Batteriezellen aus dem Batteriesystem entnommen.

Die Akkumulatoren-Aufbereitungsanlage 8 besitzt eine Akkumulator-Zerkleinerungsanlage 16 zum Zerkleinern der Akkumulatoren 10.1, 10.2,.., sodass Zerkleinerungsmaterial 18 erhalten wird. Die Akkumulator-Zerkleinerungsanlage 16 ist beispielsweise zum Zerschneiden, Zerschlagen oder Zermahlen der Akkumulatoren 10.1, 10.2, .. ausgebildet.

In Materialflussrichtung hinter der Akkumulator-Zerkleinerungsanlage 16 kann eine optionale (und daher wie alle optionalen Komponenten gestrichelt eingezeichnete) Trennvorrichtung 20 angeordnet sein. Mittels der Trennvorrichtung 20 wird das Zerkleinerungsmaterial 18 in Schwarzmasse 58 und eine Restfraktion getrennt. Die Restfraktion enthält Gehäuseteile, in der Regel zerkleinerte Plastikteile, sowie Metallteile, beispielsweise Anschlusselektroden, sowie Folien, beispielsweise der Teile Separatorfolie oder der Leiterfolie. Die Schwarzmasse 58 umfasst im Fall von Lithium-Akkumulatoren Graphit, im Graphit eingelagerte Substanzen, wie beispielsweise Metallsalze, Leitsalz-Lösungsmittel und Leitsalz. Wenn eine Trennvorrichtung 20 vorhanden ist, ist sie vorzugsweise über eine staubdichte, insbesondere luftdichte, Leitung mit der Akkumulator-Zerkleinerungsanlage 16 verbunden.

In Materialflussrichtung hinter der Akkumulatoren-Zerkleinerungsanlage 16 und, sofern vorhanden, hinter der Trennvorrichtung 20, ist eine Waschvorrichtung 22 angeordnet. Die Waschvorrichtung 22 kann auch als Wäscher bezeichnet werden. In der Waschvorrichtung 22 wird das Zerkleinerungsmaterial mit einem Wasch-Lösungsmittel 24 versetzt. Es ist vorteilhaft, nicht aber notwendig, dass die Waschvorrichtung 22 einen Mischer aufweist, beispielsweise einen Rührer, oder eine drehbar gelagerte Trommel.

Durch den Kontakt mit dem Zerkleinerungsmaterial 18 wird aus dem Wasch-Lösungsmittel 24 eine Waschflüssigkeit 26. Die Waschflüssigkeit 26 enthält Leitsalz und wird durch eine optional vorhandene Waschlösungsmittel-Regenerationsanlage 28 regeneriert und erneut der Waschvorrichtung 22 zugeführt.

Wenn die Trennvorrichtung 20 vorhanden ist, so kann wiederum optional ein Folientrenner 31 vorhanden sein, mittels dem Metallfolien 61 von der Restfraktion abgeschieden werden. Die so erhaltenen Metallfolien 61 können ebenfalls der Waschvorrichtung 22 zugeführt werden.

In Materialflussrichtung hinter der Waschvorrichtung 22 ist ein Trockner 30 zum Trocknen des gewaschenen Zerkleinerungsguts, insbesondere der gewaschenen Schwarzmasse 58, angeordnet. Der Trockner 30 ist von der Waschvorrichtung 22 durch eine Schleuse 32.1 getrennt. Die vom Folientrenner 31 nicht abgetrennten Bestandteile werden im Trockner 30 oder einem weiteren Trockner getrocknet. Wenn die vom Folientrenner 31 nicht abgetrennten Bestandteile im Trockner 30 getrocknet werden, erfolgt das vorzugsweise zeitlich versetzt zur Schwarzmasse 58.

Zwischen der Akkumulatoren-Zerkleinerungsanlage 16 und der Waschvorrichtung 22 kann ebenfalls eine Schleuse 32.2 angeordnet sein. Wenn eine Trennvorrichtung 20 vorhanden ist, kann zwischen der Trennvorrichtung 20 und der Waschvorrichtung 22 ebenfalls eine Schleuse 32.3 angeordnet sein.

Der Trockner 30 besitzt optional einen Mischer 34, der beispielsweise ein Stabmischer sein kann. Es ist möglich, dass der Mischer 34, insbesondere ein Rührelement des Mischers, gekühlt oder gewärmt wird.

Ein Druck p₃₀ im Trockner 30 beträgt vorzugsweise p₃₀ ≤ 700 hPa, insbesondere p₃₀ ≤ 600 hPa. Eine Temperatur T₃₀ im Trockner beträgt vorzugsweise höchstens 70°C, insbesondere höchstens 50°C.

Wenn keine Trennvorrichtung 20 vorhanden ist, kann das getrocknete Zerkleinerungsmaterial in einer in Materialflussrichtung hinter dem Trockner 30 angeordnete optionalen Trennvorrichtung 36 in Schwarzmasse einerseits sowie eine Restfraktion getrennt werden. Die Restfraktion besteht beispielsweise aus Schwergut und Metallfolien. In der Regel besitzt die Akkumulatoren-der Aufbereitungsanlage 8 nur eine Trennvorrichtung 20, 36.

Ist die Trennvorrichtung vorhanden und werden die Metallfolien der Waschvorrichtung 22 zugeführt, so kann das getrocknete Zerkleinerungsmaterial in der optionalen Trennvorrichtung 36 in Schwarzmasse einerseits sowie die gereinigten Metallfolien getrennt werden.

Das getrocknete Zerkleinerungsmaterial, insbesondere die getrocknete Schwarzmasse 58, wird entweder in einem Transportbehälter 38 abgefüllt oder einer nasschemische Aufbereitungsanlage 40 zugeführt. In der Aufbereitungsanlage 40 werden die Metallbestandteile der Schwarzmasse 58 (in Form von Metallsalzen) in Lösung gebracht. Dazu wird die Schwarzmasse beispielsweise mit einer Mineralsäure, insbesondere konzentrierter Schwefelsäure, versetzt und insbesondere mit Wasser gelaugt. Dabei entstehendes Abgas 42 wird einer Abgasreinigungsanlage 44 zugeführt. Darin wird beispielsweise Fluorwasserstoff entfernt, beispielsweise ausgefällt.

Die Waschlösungsmittel-Regenerationsanlage 28 umfasst beispielsweise eine Desti-Ilierkolonne. Zunächst wird die Waschflüssigkeit 26 in den gasförmigen Zustand überführt das erfolgt beispielsweise mittels einer Heizung 46 oder durch das Anlegen eines Unterdrucks mittels einer Vakuumpumpe 48. Die dadurch entstandenen gasförmigen Bestandteile werden fraktioniert kondensiert.

Die Fraktion, deren Siedetemperatur der Siedetemperatur des Wasch-Lösungsmittels 24 entspricht, wird in die Waschvorrichtung 22 zurückgeführt.

Höhersiedende Bestandteile 50 und tiefersiedende Bestandteile 52 werden weiterverarbeitet, beispielsweise erneut destilliert. Dadurch lassen sich die Bestandteile des Elektrolyten der Akkumulatoren 10 wiederverwerten. Nicht kondensiert Bestandteile 54, bei denen es sich überwiegend um Luft handelt, werden in einer Abgasreinigung 56 gereinigt und dann in die Umgebung abgegeben. Höhersiedende Bestandteile 50 sind diejenigen Bestandteile, deren Siedepunkt oberhalb des maximalen Siedepunkts des Wasch-Lösungsmittels liegen.

Die Waschlösungsmittel-Regenerationsanlage 28 ist jedoch nicht zwingend notwendig. Es ist alternativ möglich, das Wasch-Lösungsmittel 24 aus einem Lagerbehälter der Waschvorrichtung 22 zuzuführen und die Waschflüssigkeit 26 ebenfalls in einen Lagerbehälter zu leiten. Eine etwaige Aufbereitung der Waschflüssigkeit 26 kann dann in einer örtlich beabstandeten Waschlösungsmittel-Regenerationsanlage erfolgen.

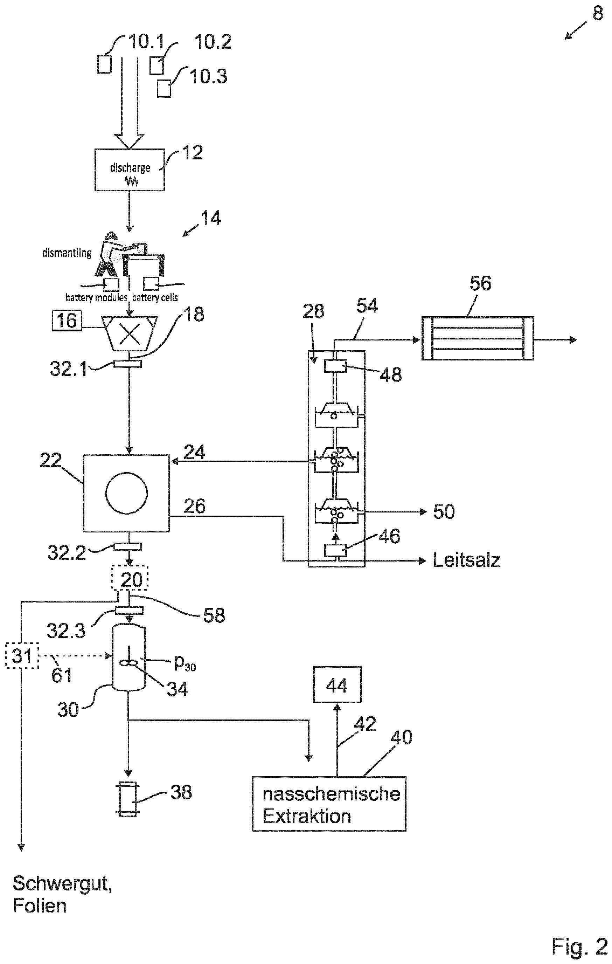

Figur 2 zeigt eine alternative Ausführungsform einer erfindungsgemäßen Akkumulatoren-Aufbereitungsanlage 8. In Materialflussrichtung hinter der Akkumulatoren-Zerkleinerungsanlage 16 ist unmittelbar die Waschvorrichtung 22 angeordnet. Hierunter wird verstanden, dass in Materialflussrichtung hinter der Akkumulatoren-Zerkleinerungsanlage 16 und vor der Waschvorrichtung 22 keine relevante Behandlung des Zerkleinerungsmaterials 18 stattfindet. Zerkleinerungsmaterial 18 wird mittels einer staubdichten, insbesondere gasdichten und/oder explosionsgeschützten, Leitung und über die optionale Schleuse 32.2 in die Waschvorrichtung 22 gefördert.

Nach dem Waschen des Zerkleinerungsmaterials 18 wird aus dem gewaschenen Zerkleinerungsmaterial in der Trennvorrichtung 20 Schwarzmasse 58 abgetrennt und gelangt, ebenfalls über eine staubdichte, insbesondere gasdichte und/oder explosionsgeschützte, Leitung in den Trockner 30. Neben der Schwarzmasse 58 werden Schwergut und Folien erhalten. Schwergut und Folien können in einem anderen oder, wenn der Trockner 30 diskontinuierlich betrieben wird, im Trockner 30 getrocknet werden.

Es ist günstig, wenn in einem optionalen Folientrenner 31 aus dem Schwergut und den Folien Metallfolien 61 abgetrennt werden. Die Metallfolien 61 können im Trockner 30 oder einem anderen Trockner getrocknet werden. Wenn die Metallfolien 61 im Trockner 30 getrocknet werden, kann das zusammen mit der Schwarzmasse 58 oder zeitlich versetzt erfolgen.

Der Druck p₃₀ im der Waschvorrichtung 22 in Materialflussrichtung nachgelagerten Trockner 30 liegt, was unabhängig von den ansonsten im Zusammenhang mit der Figur beschriebenen Merkmalen ein bevorzugtes Merkmal ist, vorzugsweise unterhalb des Dampfdrucks des Wasch-Lösungsmittels 24 bei 60°C, insbesondere bei 50°C. Die getrocknete Schwarzmasse 58 kann entweder in den Transportbehälter 38 abgefüllt oder direkt einer nasschemischen Aufbereitungsanlage 40 zugeführt werden.

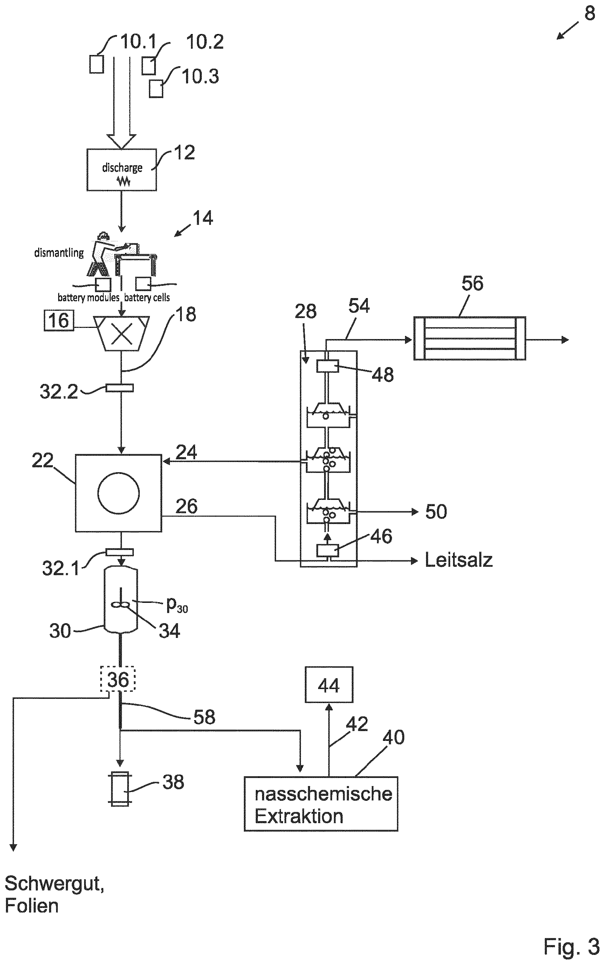

Figur 3 zeigt eine dritte Ausführungsform einer erfindungsgemäßen Akkumulatoren-Aufbereitungsanlage 8. Unmittelbar hinter der Akkumulatoren-Zerkleinerungsanlage 16 ist erneut die Waschvorrichtung 22 angeordnet. Das gewaschene Zerkleinerungsmaterial gelangt in den Trockner 30. In der unmittelbar hinter dem Trockner 30 angeordneten optionalen Trennvorrichtung 36 wird von dem getrockneten Zerkleinerungsmaterial die Schwarzmasse 58 abgetrennt. Die von der Schwarzmasse 58 abgetrennte Fraktion wird wie oben zu Figur 2 beschrieben verarbeitet.

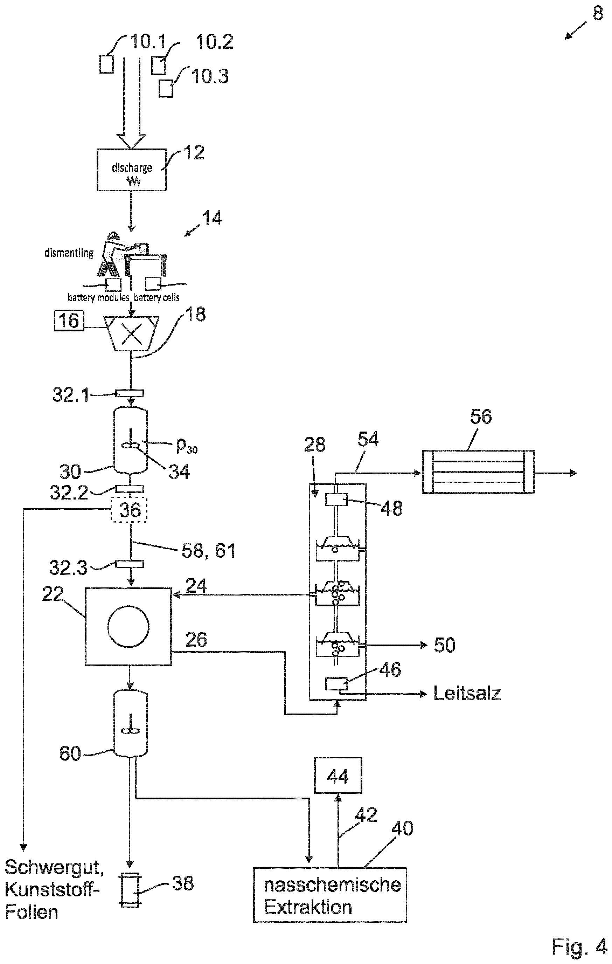

Figur 4 zeigt eine vierte Ausführungsform einer erfindungsgemäßen Akkumulatoren-Aufbereitungsanlage 8, bei der das Zerkleinerungsmaterial 18, das aus der Akkumulatoren-Zerkleinerungsanlage 16 kommt, unmittelbar in den Trockner 30 geleitet wird.

Nach dem Trocknen wird in der Trennvorrichtung 36 die Schwarzmasse 58 abgetrennt und in der Waschvorrichtung 22 gewaschen. Die gewaschene Schwarzmasse wird in einem zweiten Trockner 60 getrocknet.

Es ist günstig, wenn die Metallfolien 61 in der Trennvorrichtung 36 abgesondert werden und ebenfalls in die Waschvorrichtung 22 eingebracht werden. Die Metallfolien 61 und die Schwarzmasse 58 können gemeinsam oder zeitlich nacheinander gewaschen werden. Wiederum alternativ können die Metallfolien 61 in einer separaten Waschvorrichtung gewaschen werden. Wenn die Metallfolien 61 und die Schwarzmasse 58 gemeinsam gewaschen werden, werden sie vorzugsweise danach voneinander getrennt.

Wenn die Metallfolien 61 von der Schwarzmasse gesondert gewaschen werden, besitzt die Akkumulatoren-Aufbereitungsanlage 8 vorzugsweise einen Separator, der die an der Metallfolie 61 anhaftende Schwarzmasse 58' ablöst.

Wenn die Metallfolie 61 und die Schwarzmasse 58 gemeinsam gewaschen und im Trockner 60 getrocknet werden, besitzt die Akkumulatoren-Aufbereitungsanlage 8 vorzugsweise eine Trennvorrichtung zum Trennen von Metallfolie 61 und Schwarzmasse 58 sowie einen Separator, der die an der Metallfolie 61 anhaftende Schwarzmasse 58' ablöst.

Es ist gemäß einer bevorzugten Ausführungsform möglich, das Schwergut und/oder die Kunststofffolien ebenfalls in der Waschvorrichtung 22 oder einer weiteren Waschvorrichtung zu gewaschen. Das Schwergut und/oder die Folien können im Trockner 60 und/oder eine gesonderten Trockner getrocknet werden.

Der Enddruck p_{30,end} im Trockner 30, also der Druck am Ende des Trockenprozesses, beträgt vorzugsweise p₃₀ ≤ 300 hPa, insbesondere p₃₀ ≤ 50 hPa. Eine Temperatur T₃₀ im Trockner beträgt vorzugsweise höchstens 60°C, insbesondere höchstens 50°C.

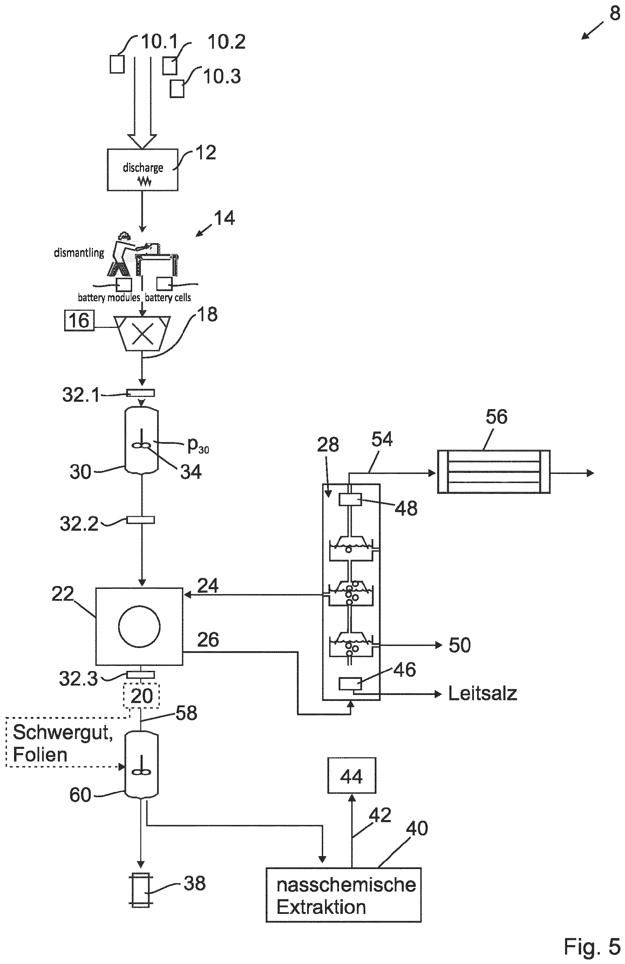

Figur 5 zeigt eine fünfte Ausführungsform einer erfindungsgemäßen Akkumulatoren-Aufbereitungsanlage 8, bei der die Trennvorrichtung 20 in Materialflussrichtung unmittelbar hinter der Waschvorrichtung 22 angeordnet ist. Das abgetrennte Schwergut und die Folien werden zeitlich versetzt zur Schwarzmasse 58 im Trockner 60 getrocknet. Alternativ kann die Trennvorrichtung 20 auch in Materialflussrichtung hinter dem zweiten Trockner 60 angeordnet sein.

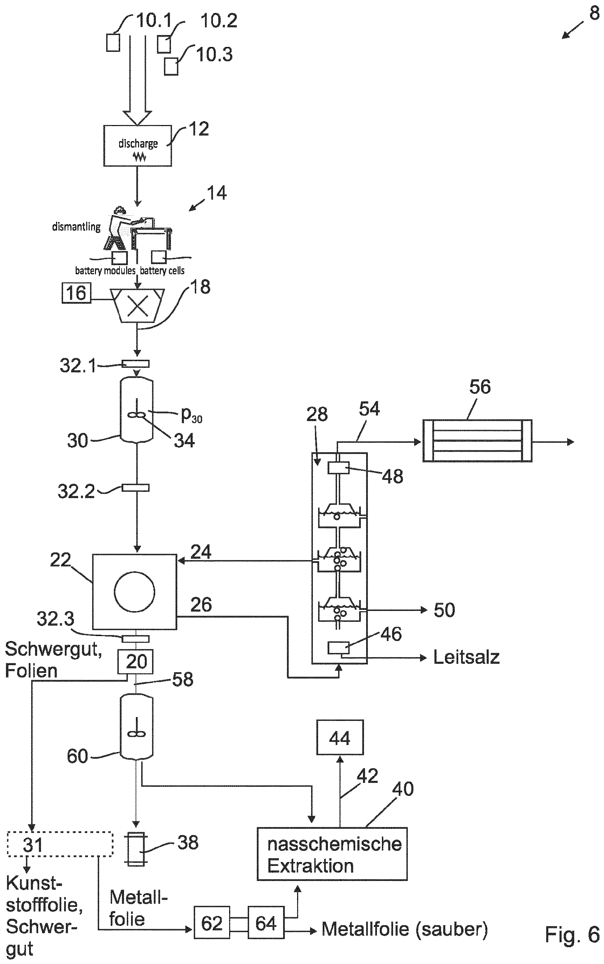

Figur 6 zeigt eine weitere Ausführungsform einer erfindungsgemäßen Akkumulatoren-Aufbereitungsanlage 8, bei der nach der Waschvorrichtung 22 die Trennvorrichtung 20 die Schwarzmasse 58 einerseits und die Restfraktion, die das Schwergut und die Folien umfasst, andererseits voneinander trennt. In Materialflussrichtung hinter der Trennvorrichtung 20 ist der Folientrenner 31 angeordnet, der die Metallfolien extrahiert und einem gesonderten Trockner 62 zuleitet. Die an der Metallfolie anhaftende Schwarzmasse 58 ist häufig kobalthaltiger als nicht anhaftende Schwarzmasse 58. Alternativ zum gesonderten Trockner 62 kann die Metallfolie auch im Trockner 60 getrocknet werden. In Materialflussrichtung hinter dem Trockner 60 ist ein Separator 64, beispielsweise ein Luftstrahlsieb, zum Abtrennen der Schwarzmasse von den getrockneten Metallfolien angeordnet.

### Bezugszeichenliste

| | | | |
|---|---|---|---|
| 8 | Akkumulatoren-Aufbereitungsan-lage | 56 | Abgasreinigung |
| | | 58 | Schwarzmasse |
| 10 | Akkumulatoren | 60 | Trockner |
| 12 | Entladestation | 62 | Trockner |
| 14 | Demontagestation | 64 | Separator |
| 16 | Akkumulatoren-Zerkleinerungsanlage | | |
| 18 | Zerkleinerungsmaterial | | |
| 20 | Trennvorrichtung | | |
| 22 | Waschvorrichtung | | |
| 24 | Wasch-Lösungsmittel | | |
| 26 | Waschflüssigkeit | | |
| 28 | Waschlösungsmittel-Regenerationsanlage | | |
| 30 | Trockner | | |
| 31 | Folientrenner | | |
| 32 | Schleuse | | |
| 34 | Mischer | | |
| 36 | Trennvorrichtung | | |
| 38 | Transportbehälter | | |
| 40 | nasschemische Aufbereitungsanlage | | |
| 42 | Abgas | | |
| 44 | Abgasreinigungsanlage | | |
| 46 | Heizung | | |
| 48 | Vakuumpumpe | | |
| 50 | höhersiedende Bestandteile | | |
| 52 | tiefersiedende Bestandteile | | |
| 54 | nichtkondensierte Bestandteile | | |

## Patentansprüche

1. Verfahren zum Wiederverwerten von Akkumulatoren, insbesondere Lithium-Akkumulatoren, die ein in einem Leitsalz-Lösungsmittel gelöstes Leitsalz enthalten, mit den Schritten:
(a) Zerkleinern der Akkumulatoren, sodass Zerkleinerungsmaterial erhalten wird, und
(b) Auswaschen des Leitsalzes mit einem Wasch-Lösungsmittel aus dem Zerkleinerungsmaterial, sodass gewaschenes Zerkleinerungsmaterial erhalten wird.

2. Verfahren nach Anspruch 1, **dadurch gekennzeichnet, dass**
(a) das Leitsalz eine Fluorverbindung ist und/oder
(b) eine Lithiumverbindung ist.

3. Verfahren nach einem der vorstehenden Ansprüche, **gekennzeichnet durch** die Schritte:
(a) Abscheiden des Wasch-Lösungsmittel aus einer Waschflüssigkeit, die durch das Auswaschen des Leitsalzes mit einem Wasch-Lösungsmittel aus dem Zerkleinerungsmaterial entstanden ist, insbesondere durch Destillation, sodass regeneriertes Wasch-Lösungsmittel erhalten wird, und
(b) Wiederverwenden des regenerierten Wasch-Lösungsmittels zum Auswaschen von Leitsalz.

4. Verfahren nach Anspruch 3, **gekennzeichnet durch** die Schritte:
Abscheiden des Leitsalzes aus dem Wasch-Lösungsmittel, insbesondere durch Destillieren.

5. Verfahren nach einem der vorstehenden Ansprüche, **gekennzeichnet durch** die Schritte:
nasschemisches Extrahieren mindestens eines metallischen Bestandteils aus dem gewaschenen Zerkleinerungsmaterial.

6. Verfahren nach einem der vorstehenden Ansprüche, **dadurch gekennzeichnet, dass**
(a) das Leitsalz-Lösungsmittel einen maximalen Siedepunkt hat, wobei der maximalen Siedepunkt diejenige Temperatur ist, für die gilt, dass von 1 Liter Leitsalz-Lösungsmittel nach 1 Stunde bei dieser Temperatur bei 1013 hPa zumindest 99 Gewichtsprozent verdampft sind und
(b) das Wasch-Lösungsmittel einen maximalen Siedepunkt hat, der unterhalb des maximalen Siedepunkts des Leitsalz-Lösungsmittels liegt.

7. Verfahren nach einem der vorstehenden Ansprüche, **dadurch gekennzeichnet, dass** das Wasch-Lösungsmittel ein Lösungsmittel für PVDF ist.

8. Verfahren nach einem der vorstehenden Ansprüche, **gekennzeichnet durch** den Schritt
(a) Trocknen des gewaschenen Zerkleinerungsmaterials und danach
(b) Abtrennen von Folien, insbesondere Metallfolien, aus dem gewaschenen Zerkleinerungsmaterial.

9. Verfahren nach einem der vorstehenden Ansprüche, **gekennzeichnet durch** die Schritte
(a) nach dem Zerkleinern der Akkumulatoren, Trocknen des Zerkleinerungsmaterials, sodass getrocknetes Zerkleinerungsmaterial erhalten wird,
(b) optional Abtrennen
von Schwergut und/oder
von Folien, insbesondere Kunststofffolien, aus dem getrockneten Zerkleinerungsmaterial, sodass Schwarzmasse erhalten wird, und
(c) Auswaschen des Leitsalzes mit dem Wasch-Lösungsmittel aus dem getrockneten Zerkleinerungsmaterial, insbesondere in Form der Schwarzmasse,
(d) Trocknen der Schwarzmasse.

10. Akkumulatoren-Aufbereitungsanlage mit
(a) einer Akkumulator-Zerkleinerungsanlage zum Zerkleinern der
Akkumulatoren, sodass Zerkleinerungsmaterial erhalten wird, **gekennzeichnet durch**
(b) eine Waschvorrichtung zum Waschen des Zerkleinerungsmaterials mit einem Wasch-Lösungsmittel, sodass Waschflüssigkeit erhalten wird.

11. Akkumulatoren-Aufbereitungsanlage nach Anspruch 10, **gekennzeichnet durch** eine Waschlösungsmittel-Regenerationsanlage zum Abtrennen von Wasch-Lösungsmittel aus der Waschflüssigkeit und Rückführen des Wasch-Lösungsmittels zur Waschvorrichtung.

12. Akkumulatoren-Aufbereitungsanlage nach Anspruch 11, **dadurch gekennzeichnet, dass** die Waschlösungsmittel-Regenerationsanlage eine Destilliervorrichtung umfasst.

13. Akkumulatoren-Aufbereitungsanlage nach einem der Ansprüche 10 bis 12, **gekennzeichnet durch**
zumindest einen in Materialflussrichtung hinter und/oder vor der Waschvorrichtung angeordneten Trockner, der ausgebildet ist zum Trocknen des getrockneten Zerkleinerungsmaterials.

14. Akkumulatoren-Aufbereitungsanlage nach einem der Ansprüche 10 bis 13,
**gekennzeichnet durch** eine Trennvorrichtung zum Abtrennen von Schwergut und/oder von Folien, insbesondere Metallfolien und/oder Kunststofffolien, des Zerkleinerungsgut, sodass Schwarzmasse erhalten wird.

15. Akkumulatoren-Aufbereitungsanlage nach einem der Ansprüche 10 bis 14, **gekennzeichnet durch**
eine nasschemische Aufbereitungsanlage zum nasschemischen Extrahieren zumindest eines Metallbestandteils aus der gewaschenen Schwarzmasse.
